Europäisches Patentamt

European Patent Office

Office européen des brevets

(19)

(11) Veröffentlichungsnummer: **0 128 325**
**A2**

(12) **EUROPÄISCHE PATENTANMELDUNG**

(21) Anmeldenummer: **84104912.5**

(22) Anmeldetag: **02.05.84**

(51) Int. Cl.³: **B 01 D 13/04**

(30) Priorität: **10.05.83 DE 3317037**

(43) Veröffentlichungstag der Anmeldung: **19.12.84**
**Patentblatt 84/51**

(84) Benannte Vertragsstaaten: **AT BE CH DE FR GB IT LI LU NL SE**

(71) Anmelder: **HOECHST AKTIENGESELLSCHAFT,**
**Postfach 80 03 20, D-6230 Frankfurt am Main 80 (DE)**

(72) Erfinder: **Heidel, Peter, Dr., Eulenweg 6,**
**D-8903 Bobingen 1 (DE)**
Erfinder: **Amstutz, Stefan, Bleichstrasse 1,**
**D-6204 Taunusstein 4 (DE)**
Erfinder: **Walch, Axel, Dr., Hans-Sachs-Strasse 5,**
**D-6000 Frankfurt/Main 90 (DE)**

(54) **Membran aus regenerierter Cellulose mit verbesserten Diffusionseigenschaften und Verfahren zur Herstellung.**

(57) Es wird eine Viskosemembran mit verbesserten Diffusionseigenschaften beschrieben, die eine Trockendicke bis zu 50 µm besitzt, deren Ultrafiltrationsrate zwischen $15 \cdot 10^{-5}$ und $30 \cdot 10^{-5}$ [cm/sec · bar] liegt und die eine diffusive Permeabilität für Harnstoff zwischen $8,0 \cdot 10^{-4}$ und $11 \cdot 10^{-4}$ [cm/sec] aufweist und eine diffusive Permeabilität für Vitamin $B_{12}$ zwischen $9,0 \cdot 10^{-5}$ und $13,5 \cdot 10^{-5}$ [cm/sec]. Die Membran wird nach dem Viskoseverfahren hergestellt, wobei der Viskose vor dem Eintritt in die Spinndüse eine Flüssigkeit beigemischt wird, enthaltend eine verdünnte wäßrige Lösung, Emulsion oder Dispersion von nieder- oder hochmolekularen Stoffen, die in Wasser löslich, emulgier- oder dispergierbar sind.

EP 0 128 325 A2

HOECHST AKTIENGESELLSCHAFT
KALLE Niederlassung der Hoechst AG

83/K 028                                    30. April 1984
                                            WLJ-DC.Ho-bl


Membran aus regenerierter Cellulose mit verbesserten Diffusionseigenschaften und Verfahren zur Herstellung


Die Erfindung betrifft eine aus Viskose hergestellte Membran für die Dialyse, insbesondere für die Hämodialyse, aus regenierter Cellulose mit verbesserten Diffusionseigenschaften sowie ein Verfahren zu deren Herstellung.


Das Verfahren der Dialyse und die als "künstliche Niere" bekannten Vorrichtungen dienen insbesondere der Behandlung von chronischen Nierenleiden, wobei aus dem Blut der Patienten toxische und harnpflichtige Metabolite mit möglichst permselektiven, d.h. selektiv durchlässigen, Membranen abgetrennt werden sollen. Metabolite sind Bestandteile der lebenden Zellen, die den normalen Ablauf der Stoffwechselreaktionen steuern, sowie Stoffwechselprodukte, die im menschlichen oder tierischen Organismus gebildet oder abgebaut werden. Harnpflichtige Metabolite sind niedermolekulare Verbindungen, wie Harnstoff, Kreatinin oder Wasser, und höhermolekulare Verbindungen, wie Kohlenhydrate und Peptide, die bei gesunden Nieren aus dem Blut entfernt und über den Harn ausgeschieden werden.


Bei der Hämodialyse sollen die toxischen und harnpflichtigen Metabolite möglichst quantitativ, insbesondere durch Lösungs-/Diffusionsvorgänge über gelartige Poren einer permselektiven Membran aus dem Blut in eine Spülflüssigkeit übergeführt werden. Treibende Kraft für den Durchtritt jeder diffusiblen Substanz durch die Membran ist ihre unterschiedliche Konzentration zu beiden Seiten der

H O E C H S T   A K T I E N G E S E L L S C H A F T
KALLE  Niederlassung der Hoechst AG

- 2 -

Membran (diffusive Permeabilität). Zur Permeation von Wasser (Ultrafiltration) ist eine geringe Druckdifferenz erforderlich, wobei auf der Blutseite des Dialysators ein höherer hydrostatischer Druck herrscht oder aber ein Unterdruck auf der Dialyseseite angelegt wird.

Von einer geeigneten Dialysemembran wird neben guter Blutverträglichkeit und Naßfestigkeit große Dialysierleistung, d.h. gute Permeabilität, verlangt. In der Praxis hat sich als Membranmaterial vielfach regenerierte Cellulose bewährt, aber auch Membranen aus vollsynthetischen Polymeren, beispielsweise auf Basis von Polyacrylnitril, Celluloseacetat oder Polycarbonat, lassen sich in technischem Maßstab wirtschaftlich fertigen und werden in neuerer Zeit beim Bau von Dialysatoren erfolgreich eingesetzt.

Die im Handel befindlichen Dialysemembranen aus regenerierter Cellulose werden bevorzugt nach zwei grundsätzlich verschiedenen Verfahren hergestellt, nämlich nach dem Viskose-Verfahren und dem Kupferammoniak-Verfahren. Bei dem ersten Verfahren wird eine durch Xanthogenierung hergestellte Viskoselösung zu flächenhaften Gebilden aus Viskose-Gel versponnen, d.h. koaguliert, und in saurem Medium zu Cellulosehydrat-Gel regeneriert, gewaschen, entschwefelt, mit Weichmacher behandelt und getrocknet. Bei dem zweiten Verfahren wird Cellulose mit einer wäßrigen ammoniakalischen Lösung ("Schweizers Reagens") in eine klare Lösung einer Komplexverbindung übergeführt, die anschließend zu flächenhaften Körpern versponnen wird. In geeignetem Medium wird danach die Cellulose regeneriert. Aufgrund

HOECHST AKTIENGESELLSCHAFT
KALLE Niederlassung der Hoechst AG

- 3 -

der beiden völlig verschiedenen Verfahrensweisen zeigen die danach hergestellten Membranen große Unterschiede in ihrem strukturellen Aufbau und folglich auch Unterschiede in ihren dialytischen Eigenschaften.

So zeigen die nach dem Kupferammoniak-Verfahren hergestellten Membranen den Nachteil, daß ihre Molekulargewichtsausschlußgrenze auf etwa 5 000 bis 10 000 Dalton begrenzt ist, so daß während der Dialyse mittel- und hochmolekulare Metabolite im Blut des Patienten angereichert werden. Auch verlangt dieses Verfahren relativ aufwendige Maßnahmen zur Rückgewinnung der eingesetzten Kupfersalze und zur Reinigung der Membran von Kupferspuren.

Obwohl demgegenüber die bekannten Viskosemembranen all diese Nachteile nicht aufweisen, sind sie bezüglich ihrer Dialysierleistung nicht zufriedenstellend oder weisen ebenfalls nur geringe Naßfestigkeit auf. Sie können daher nur bedingt für Zwecke der Hämodialyse eingesetzt werden. Dies gilt insbesondere, da die Ultrafiltration und diffusive Permeabilität bei den bekannten nach dem Viskoseverfahren hergestellten Dialysierschläuchen aus Cellulosehydrat meist zu gering sind.

Eine Membran, die den hohen Anforderungen genügt und die nach dem Viskose-Verfahren hergestellt ist, beschreibt die EP-PS 0 001 047, die es sich zur Aufgabe gemacht hat, die diffuse Permeabilität, die Ultrafiltration und zugleich die Naßfestigkeit der bekannten Membranen zu verbessern. Diese Aufgabe wird gemäß der EP-PS gelöst durch eine Membran, die im trockenen spannungsfreien Zustand in Längs- und Querrichtung im wesentlichen gleich stark orientiert ist.

Obwohl die beschriebene Viskosemembran aufgrund ihrer ausgewogenen Eigenschaften bezüglich mechanischer Festigkeit und Permeabilität erfolgreich eingesetzt wird, erwies sie sich in manchen Fällen doch nicht als genügend effektiv, und eine Verbesserung der Diffusionseigenschaften wird zur Erhöhung der Dialysierleistung angestrebt. Durch die Herstellung sehr dünner Membranen können zwar die Ultrafiltration und die diffusive Permeabilität gesteigert werden, jedoch führt die mit dem Absinken der Wandstärke einhergehende abfallende Naßfestigkeit, ausgedrückt durch den gemessenen Berstdruck, zu großen Problemen. Sie bedingt u.a., daß herkömmliche Dialysatorkonstruktionen eine äußerst aufwendige Profilierung zur Stützung der Membranen aufweisen müssen, um das Blutfüllvolumen der Geräte bei Anlegen eines transmembranen Druckes möglichst klein bzw. konstant zu halten.

Der Erfindung liegt somit die Aufgabe zugrunde, eine Membran aus regenerierter Cellulose zu schaffen, hergestellt nach dem Viskose-Verfahren, mit welcher eine verbesserte Dialysierleistung erreicht werden kann. Insbesondere soll die Membran erhöhte Werte für Ultrafiltration sowie diffusive Permeabilität aufweisen. Ferner soll ein Verfahren zur Herstellung dieser Membran angegeben werden.

Gelöst wird diese Aufgabe durch eine gattungsgemäße Membran, die eine Dicke bis zu 50 /um besitzt, deren Ultrafiltrationsrate im Bereich von $15 \cdot 10^{-5}$ bis $30 \cdot 10^{-5}$ [cm/sec · bar] liegt, und die eine diffusive Permeabili-tät zwischen $8,0 \cdot 10^{-4}$ und $11,0 \cdot 10^{-4}$ [cm/sec] , gemes-sen an der Permeation von Harnstoff, und zwischen $9,0 \cdot 10^{-5}$ und $13,5 \cdot 10^{-5}$ [cm/sec] , gemessen an der Permeation von Vitamin $B_{12}$, aufweist.

Die Diffusions- und Permeabilitätseigenschaften von Membranen für die Dialyse werden entsprechend den Normen des U.S. Department of Health, Education and Welfare durch die Ultrafiltration und die diffusiven Permeabilitäten für Harnstoff und Vitamin $B_{12}$ beschrieben (siehe DHEW publica-tion (NIH) 77-1294, Washington D.C. (1977), 7-28, Titel: "Evaluation of Hemodialysis and Dialysis Membranes").

Die Ultrafiltration (mechanische Permeabilität) wird mit destilliertem Wasser bei Drucken von 0,1 bis 3,0 bar bei 20°C in einer gerührten zylindrischen Zelle (500 U/min; 350 ml) bestimmt (Membranfläche: 43 cm²).

Die diffusive Permeabilität wird an trägerfreien Membranen bei 37°C für wäßrige Lösungen von 1.500 ppm Harnstoff oder 1.000 ppm Vitamin $B_{12}$ gemessen. Die Bestimmung der Konzentrationsdifferenz erfolgte kontinuierlich in einem Differential-Refraktometer "Lamidur" (Firma Winopal).

Die Membranen gemäß der vorliegenden Erfindung können sowohl flächig als auch schlauchförmig ausgebildet sein. Dabei kann die schlauchförmige Membran aufgrund bekannter Techniken nahtlos gefertigt sein oder aber auch durch Verkleben einer zum Schlauch geformten flachen Cellulosemembran an einer Überlappungsnaht.

In den bevorzugten Ausführungsformen der erfindungsgemäßen Membran beträgt deren Ultrafiltrationsrate $19 \cdot 10^{-5}$ bis $25 \cdot 10^{-5}$ [cm/sec · bar], und die diffusive Permeabilität liegt für Harnstoff im Bereich von $8,5 \cdot 10^{-4}$ bis $10 \cdot 10^{-4}$ [cm/sec] und für Vitamin $B_{12}$ von $10 \cdot 10^{-5}$ bis $12,5 \cdot 10^{-5}$ [cm/sec]. Gleichzeitig soll die Naßfestigkeit der Membran nicht unter 0,33 bar, gemessen als Berstdruck nach DIN 53 113, absinken. Die Trockendicke der Membran soll bevorzugt im Bereich zwischen 20 und 40 /um liegen.

Eine weitere Lösung der der vorliegenden Erfindung zugrundeliegenden Aufgabe ist ein Verfahren zur Herstellung der erfindungsgemäßen Membran. Dieses Verfahren basiert auf dem in der Einleitung erwähnten und bereits zum Stand der Technik zählenden Viskose-Verfahren, bei dem man Cellulose auf chemischem Wege in Alkali-Cellulose umwandelt, diese mit Schwefelkohlenstoff umsetzt und das gebildete Xanthogenat in wäßriger Lauge löst. Diese Lösung, die in der Fachwelt Viskose genannt wird, enthält im allgemeinen einen Celluloseanteil von 5 bis 10 Gew.-% Cellulose, beispielsweise aus Naldelholz hergestellten Sulfitzellstoff, und einen Anteil von 4 bis 7 Gew.-% Natriumhydroxid, bezo-

H O E C H S T   A K T I E N G E S E L L S C H A F T
KALLE  Niederlassung der Hoechst AG

- 7 -

gen auf die gesamte Lösung. Sie kann z.B. nach dem in der
EP-PS 0 012 928 beschriebenen Verfahren hergestellt werden.

Der so erzeugten Viskose wird nach dem Verfahren gemäß der
Erfindung vor dem Eintritt in die Spinndüse, durch welche
die Viskose in die Fällflüssigkeit extrudiert wird, eine
Flüssigkeit beigemischt. Diese beigemischte Flüssigkeit
ist insbesondere eine verdünnte wäßrige Lösung, eine
Emulsion oder eine Dispersion von bevorzugt hydroxylgruppenhaltigen und/oder carboxylgruppenhaltigen, nieder- oder
hochmolekularen, wasserlöslichen oder in Wasser emulgierbaren oder dispergierbaren organischen Verbindungen. Gegebenenfalls können in dieser Flüssigkeit auch in Wasser
oder wäßrigem Alkali lösliche anorganische Verbindungen
enthalten sein sowie als Emulsions- oder Dispersionsstabilisatoren wirkende oberflächenaktive Verbindungen.

Die der Viskose zugesetzten und mit der Viskose vermischten Substanzen können in Wasser gelöste, emulgierte oder
dispergierte, primäre, sekundäre, tertiäre, ein- oder
mehrwertige Alkohole, Hydroxylgruppen und/oder Carboxylgruppen enthaltende wasserlösliche Polymere, wasserlösliche Tenside und wasserlösliche oder in wäßrigem Alkali
lösliche Salze sein. Im Gemisch mit Wasser können Alkohole, wasserlösliche Polymere und Tenside oder in Wasser
bzw. in wäßrigem Alkali gelöste anorganische Verbindungen
einzeln oder im Gemisch miteinander vertreten sein.

Die Flüssigkeit kann die unbegrenzt mit Wasser mischbaren Alkohole Methanol, Ethanol, Propanol-(1), Propanol(2), 2-Methylpropanol-(2), Ethandiol, Propandiol-(1,2), Glycerin und die mit Wasser nicht vollständig vermischbaren Alkohole Butanol-(1), Butanol-(2), gesättigte aliphatische Carbonsäuren mit mehr als 10 Kohlenstoffatomen, wie z.B. die Laurin-, Myristin- oder Palmitinsäure, ungesättigte Fettsäuren, wie z.B. die Öl- oder Linolsäure, wasserlösliche Cellulosederivate, wie z.B. Methyl-, Hydroxyethyl- oder Carboxymethylcellulose, Polyvinylalkohol, Alginsäuren, nichtionogene Tenside, wie z.B. Glycerin- oder Sorbitanfettsäureester oder Polyoxyethylen-, Glycerin- oder Polyoxyethylen-Sorbitanfettsäureester, in Wasser oder wäßrigem Alkalihydroxid lösliche anorganische Substanzen, wie z.B. Natriumsulfat, Lithiumsulfat und Natriumsilikate (z.B. Wasserglas) enthalten.

Die Flüssigkeit, die eine Lösung, Emulsion oder Dispersion sein kann, wird der Viskose zweckmäßigerweise nach dem Reifen und unter Umständen direkt vor dem Verspinnen, d.h. vor Eintritt in die Spinndüse, zugefügt und in einem handelsüblichen Homogenisator intensiv mit der Viskose vermischt. Die Flüssigkeit wird der Viskose in Mengen von ca. 5 bis 100 Gew.-%, vorzugsweise 20 bis 50 Gew.-%, bezogen auf das Gewicht der eingesetzten Viskose, zugegeben.

Die der Viskose zugesetzte Flüssigkeit kann ein Gemisch von Wasser und den mit Wasser unbegrenzt mischbaren Alkoholen sein, in der der Alkohol in Gehalten von 5 bis 50%, vorzugsweise 10 bis 25%, enthalten ist. Bei Alkoholen, die mit Wasser nicht vollständig mischbar sind, wie z.B. den aufgeführten Butanolen, kann es ab bestimmten Konzentrationen zweckmäßig sein, zur Erzielung einer klaren Lösung als Lösungsvermittler mit Wasser vollständig mischbare Alkohole, z.B. Ethanol, zuzugeben. Ein solches Gemisch kann z.B. aus 5 bis 50, vorzugsweise 10 bis 25 Gew.-% mit Wasser unbegrenzt mischbarer Alkohole bestehen, denen zusätzlich 5 bis 25, vorzugsweise 5 bis 10 Gew.-% der erwähnten mit Wasser nicht vollständig mischbaren Alkohole zugefügt werden.

Sollen der Viskose in Wasser nicht lösliche, aliphatische Carbonsäuren mit 10 oder mehr Kohlenstoffatomen zugesetzt werden, so können diese mit Hilfe von nichtionogenen Tensiden, z.B. mit Derivaten von Sorbitanfettsäureestern, nach bekannten, z.B. in der Broschüre "Das Atlas HLB-System", herausgegeben von der Atlas-Chemie GmbH in Essen (Juli 1971), beschriebenen Verfahren durch Emulgieren im Wasser fein verteilt werden. Solche nichtionogenen Tenside werden z.B. von der Firma Atlas-Chemie GmbH unter der Produktkennzeichnung "Span" oder "Tween" in den Handel gebracht. Um eine stabile Emulsion zu erhalten, sind Tensidgehalte zwischen 3 und 15 Gew.-% erforderlich. Wenn man als Lösungsvermittler mit Wasser unbegrenzt mischbare Alkohole, wie z.B. Ethanol, in den oben erwähnten Gehalten einsetzt, kann unter Umständen der Zusatz von nichtionogenen Tensiden reduziert werden bzw. ganz fortfallen.

Der Zusatz von Lösungsvermittlern ist bei Anwendung von in Wasser nicht löslichen aliphatischen Verbindungen deshalb vorzuziehen, weil ein hoher Tensidgehalt von z.B. über 5 Gew.-% die Gefahr einer Schaumbildung in den Spinnflüssigkeiten, die für die Regenerierung des Cellulosehydrats aus Viskose erforderlich sind, erhöht.

Es hat sich aber gezeigt, daß nichtionogene Tenside in wäßriger Flüssigkeit, entsprechend der Erfindung angewendet, die Permeabilität von Viskosemembranen verbessern, so daß diese Tenside nicht alleine wegen ihres Emulgiereffektes eingesetzt werden können, sondern sie bewirken bereits eine Erhöhung der Permeabilität der Membran ab Gehalten von 0,5 Gew.-% nichtionogener Tenside in der nach dem erfindungsgemäßen Verfahren zugesetzten Flüssigkeit.

Eine weitere Ausführung der Erfindung besteht darin, der wäßrigen Flüssigkeit in Wasser oder wäßrigem Alkalihydroxid lösliche anorganische Verbindungen zuzufügen. Geeignete anorganische Verbindungen sind Natriumsulfat, Lithiumsulfat und/oder Natriumsilikat (Wasserglas), das in der Flüssigkeit in Konzentrationen von 0,2 bis 10, vorzugsweise 2 bis 5 Gew.-% Natrium- bzw. Lithiumsulfat und/oder 0,1 bis 3, vorzugsweise 0,3 bis 2 Gew.-% Natriumsilikat enthalten sein kann.

Alle beschriebenen Flüssigkeiten können zusätzlich wasserlösliche Polymere, z.B. lösliche Celluloseverbindungen mit Methyl-, Hydroxyethyl- und/oder Carboxymethyl-Seitenresten, in Konzentrationen von 1 bis 10, vorzugsweise 2 bis 5 Gew.-% enthalten. In gleicher Weise können Polyvinylalkohole und natürliche wasserlösliche Polymere, wie z.B. die Alginsäuren bzw. ihre Natrium- und Kaliumsalze,

HOECHST AKTIENGESELLSCHAFT
KALLE Niederlassung der Hoechst AG

- 11 -

eingesetzt werden.

Von den beschriebenen Flüssigkeiten sind diejenigen, die aus einem Gemisch von Wasser und mit Wasser unbegrenzt mischbaren Alkoholen, wie Methanol und Ethanol, bestehen, besonders wirksam. Sie erlauben die Herstellung von Membranen besonders hoher Permeabilität unter geringer Beeinträchtigung der Naßfestigkeit.

Der Zusatz von in Wasser nicht löslichen langkettigen aliphatischen Carbonsäuren hat über den permeabilitätssteigernden Effekt hinaus Auswirkungen auf die Haftung aufeinanderliegender Viskosemembranoberflächen. Das Aneinanderhaften der Viskosemembranen wird vermindert, so daß das Innere von Schlauchmembranen leichter geöffnet bzw. Viskosemembranen zerstörungsfrei von einer Rolle abgewickelt werden können.

Weitere Vorteile der Erfindung sollen durch die im nachfolgenden beschriebenen Beispiele verdeutlicht werden. Alle Prozentangaben sollen im Rahmen der Beschreibung der Beispiele, falls nicht eigens anders erwähnt, als Gewichtsprozent verstanden werden.

Beispiel 1
Je 100 Gewichtsteile Viskose mit einem Cellulosegehalt zwischen 6 und 8%, einem Natriumhydroxidgehalt zwischen 5 und 6% und einem Salzpunkt von 1 bis 3 (Definition und Bestimmungsmethode siehe: K. Götze, Chemiefasern, 3. Auflage, 1967, Band II, Seite 1181, Springer-Verlag Berlin/

HOECHST   AKTIENGESELLSCHAFT
KALLE   Niederlassung der Hoechst AG

- 12 -

Heidelberg/New York), wobei für die Herstellung der Viskose 30 bis 35% Schwefelkohlenstoff, bezogen auf trockene Cellulose, eingesetzt wurden, werden jeweils mit ca. 50, 100 oder 150 Gewichtsteilen Flüssigkeit entsprechend Tabelle 1 intensiv durch Rühren vermischt und zum Entfernen von eingerührten Luftbläschen zentrifugiert. Die bläschenfreie Viskoselösung wird auf eine 30 x 25 cm große Glasplatte gezogen und mit einem Rakel (Spaltweite 0,5 mm) gleichmäßig ausgestrichen. Dann wird die Glasplatte mit der Viskoseschicht 10 Minuten in eine wäßrige Lösung aus 12% Schwefelsäure und 15% Natriumsulfat (sogenanntes Müller-Bad) getaucht, wobei die Viskose koaguliert und zu einem Cellulosehydratfilm regeneriert wird. Der gebildete Film wird 15 bis 20 Minuten in 60°C heißem Wasser zur Entfernung von Säuren und Salzen gewaschen. Die klare, transparente Viskosegelmembran wird in destilliertem Wasser für die Messungen der Membraneigenschaften aufbewahrt.

Ü 128325

HOECHST AKTIENGESELLSCHAFT
KALLE Niederlassung der Hoechst AG

- 13 -

Tabelle 1

| Versuch Nr. | Zusammensetzung der Viskoselösung in Gewichtsteilen | | | | | Eigenschaften der Viskose-gelmembran | | | |
|---|---|---|---|---|---|---|---|---|---|
| | Viskose | Wasser | Ethanol | Glycerol | Natrium-sulfat | Wand-dicke /um | Ultrafil-tration (cm/s·bar) | Diff. Permea-bilität für Harnstoff (cm/s) | Berst-druck* (bar) |
| 1 | 100 | - | - | - | - | 162 | $16,5 \cdot 10^{-5}$ | $4,23 \cdot 10^{-4}$ | 0,39 |
| 2 | 100 | 100 | - | - | - | 188 | $47,9 \cdot 10^{-5}$ | $5,30 \cdot 10^{-4}$ | 0,21 |
| 3 | 100 | 50 | 50 | - | - | 171 | $68,0 \cdot 10^{-5}$ | $5,93 \cdot 10^{-4}$ | 0,34 |
| 4 | 100 | 120 | - | 30 | - | 155 | $68,2 \cdot 10^{-5}$ | $6,27 \cdot 10^{-4}$ | 0,26 |
| 5 | 100 | 90 | - | - | 10 | 184 | $60,7 \cdot 10^{-5}$ | $5,69 \cdot 10^{-4}$ | 0,20 |
| 6 | 100 | 50 | - | - | - | 165 | $39,2 \cdot 10^{-5}$ | $5,10 \cdot 10^{-4}$ | 0,26 |

*gemessen nach DIN 53113 (Messung ohne Gummimembran durchgeführt)

HOECHST AKTIENGESELLSCHAFT
KALLE Niederlassung der Hoechst AG

- 14 -

Die erhaltenen Viskosegelmembranen wurden der Einfachheit halber nicht getrocknet, sondern feucht für die Messungen eingesetzt. Die erhaltenen Permeabilitätswerte sind daher nicht absolut, sondern im Vergleich untereinander zu verwerten.

Aus den Versuchen geht hervor, daß die Ultrafiltration durch die Zusätze erheblich gesteigert werden konnte. Versuchseinstellungen Nr. 3, 4 und 5 zeigen eine hohe Ultrafiltrationsrate. Die mechanische Festigkeit der Einstellung Nr. 3 (Zusatz von Wasser und Ethanol) liegt über der Vergleichseinstellung Nr. 2 (Zusatz von Wasser).

Beispiel 2

Nach dem Viskoseverfahren wird ein unverstärkter Schlauch aus Cellulosehydrat-Gel auf bekannte Weise hergestellt. Für die Herstellung des Schlauches wird die Viskose vor Eintritt in die Spinndüse kontinuierlich mit Flüssigkeiten entsprechend Tabelle 2 versetzt und in einem handelsüblichen Homogenisator vermischt. Das verwendete Spinnbad hat eine Zusammensetzung von 10% Schwefelsäure, 13% Natriumsulfat und 10% Ammoniumsulfat. Nach der Behandlung mit einer 40% Glycerin enthaltenden wäßrigen Lösung wird der Schlauch mit Hilfe von Druckluft aufgeblasen und entsprechend der EP-PS 0 001 047 radial verdehnt. Der Schlauch wird im aufgeblasenen Zustand mit 150°C heißer Luft getrocknet und nach Flachlegen des Schlauches aufgerollt. Der erfindungsgemäße Schlauch, hergestellt aus Viskose mit zugesetzten Flüssigkeiten, wird mit einem Schlauch aus Celluloseregenerat, hergestellt aus Viskose ohne Zusatz von Flüssigkeiten, verglichen (siehe Tabelle 2).

HOECHST  AKTIENGESELLSCHAFT
KALLE  Niederlassung der Hoechst AG

- 15 -

Tabelle 2

| Versuchseinstellung | | 1 | 2 | 3 |
|---|---|---|---|---|
| Zusätze in Gew.-%, bez. auf Viskose* | | | | |
| Wasser | | 0 | 30,0 | 38,6 |
| Ethanol | | 0 | 12,9 | 0 |
| Glycerin | | 0 | 0 | 4,3 |
| Gelflachbreite | [mm] | 38 | 34 | 35 |
| Trockenflachbreite | [mm] | 49 | 49 | 49 |
| Flächengewicht | $[g/m^2]$ | 40 | 47 | 46 |
| Trockendicke | [/um] | 29 | 32 | 31 |
| Naßdicke | [/um] | 54 | 63 | 63 |
| Glyceringehalt | [%] | 58 | 56 | 60 |
| Reißfestigkeit, naß, | $[N/mm^2]$ | | | |
| längs | | 11,4 | 10,9 | 10,2 |
| quer | | 8,4 | 7,8 | 6,2 |
| Reißdehnung, naß, | [%] | | | |
| längs | | 45 | 39 | 40 |
| quer | | 66 | 72 | 55 |
| Berstdruck** | [bar] | 0,36 | 0,35 | 0,31 |
| Ultrafiltration | [cm/s·bar] | $8,3 \cdot 10^{-5}$ | $22,8 \cdot 10^{-5}$ | $20,0 \cdot 10^{-5}$ |
| Permeabilität | [cm/s] | | | |
| Harnstoff | | $7,4 \cdot 10^{-4}$ | $9,8 \cdot 10^{-4}$ | $8,3 \cdot 10^{-4}$ |
| Vitamin $B_{12}$ | | $7,9 \cdot 10^{-5}$ | $12,0 \cdot 10^{-5}$ | $11,0 \cdot 10^{-5}$ |

*Zusammensetzung der Viskose entsprechend Beispiel 1

**gemessen nach DIN 53113 (Messung ohne Gummimembran durchgeführt)

Beispiel 3

Nach dem Viskoseverfahren wird ein unverstärkter Schlauch aus Cellulosehydrat-Gel auf bekannte Weise hergestellt. Für die Herstellung des Schlauches wird die Viskose vor Eintritt in die Spinndüse kontinuierlich entsprechend Tabelle 3 versetzt und entsprechend Beispiel 2 weiterverarbeitet. Der erfindungsgemäße Schlauch wird mit einem Schlauch aus Celluloseregenerat, hergestellt aus Viskose ohne Zusatz von Flüssigkeiten, verglichen (siehe Tabelle 3).

Tabelle 3

| Versuchseinstellung | | 1 | 2 | 3 | 4 | 5 |
|---|---|---|---|---|---|---|
| Zusätze in Gew.-%, bez. auf Viskose* | | | | | | |
| Wasser | | 0 | 41,86 | 30,00 | 40,18 | 40,50 |
| Ethanol | | 0 | 0 | 12,85 | 0 | 0 |
| tert. Butanol | | 0 | 0 | 0 | 2,14 | 0,84 |
| Laurinsäure | | 0 | 0 | | 0,43 | 0 |
| Palmitinsäure | | 0 | 0 | 0 | 0 | 0,10 |
| Tween 80 | | 0 | 0 | 0 | 0 | 0,42 |
| NaOH | | 0 | 0 | 0 | 0,11 | 0 |
| Gelflachbreite | [mm] | 38 | 35 | 34 | 35 | 36 |
| Trockenflachbreite | [mm] | 49 | 48 | 49 | 49 | 48 |
| Flächengewicht | [g/m²] | 39 | 43 | 46 | 44 | 45 |
| Trockendicke | [/um] | 24 | 31 | 25 | 26 | 31 |
| Naßdicke | [/um] | 53 | 60 | 62 | 64 | 61 |
| Glyceringehalt | [%] | 50 | | 58 | 59 | |
| Reißfestigkeit, naß, | [N/mm²] | | | | | |
| längs | | 12,6 | 9,2 | 10,1 | 12,0 | 10,6 |
| quer | | 9,3 | 6,8 | 9,3 | 8,9 | 9,2 |
| Reißdehnung, naß, | [%] | | | | | |
| längs | | 42 | 33 | 30 | 35 | 33 |
| quer | | 51 | 52 | 47 | 46 | 46 |
| Berstdruck** | [bar] | 0,33 | 0,29 | 0,32 | 0,30 | 0,31 |
| Ultrafiltration | [cm/s·bar] | $9,3 \cdot 10^{-5}$ | $19,6 \cdot 10^{-5}$ | $25,6 \cdot 10^{-5}$ | $26,3 \cdot 10^{-5}$ | $22,3 \cdot 10^{-5}$ |
| Permeabilität | [cm/s] | | | | | |
| Harnstoff | | $7,6 \cdot 10^{-4}$ | $8,1 \cdot 10^{-4}$ | $8,8 \cdot 10^{-4}$ | $8,8 \cdot 10^{-4}$ | $8,6 \cdot 10^{-4}$ |
| Vitamin $B_{12}$ | | $8,3 \cdot 10^{-5}$ | $10,2 \cdot 10^{-5}$ | $11,9 \cdot 10^{-5}$ | $12,2 \cdot 10^{-5}$ | $11,3 \cdot 10^{-5}$ |

*Zusammensetzung der Viskose entsprechend Beispiel 1
**gemessen nach DIN 53113 (Messung ohne Gummimembran durchgeführt)

Neben den erheblich verbesserten Permeabilitätseigenschaften weisen die Celluloseregeneratschläuche mit Fettsäurezusatz in die Viskose (Laurinsäure oder Palmitinsäure, siehe Tabelle 3, Versuchseinstellungen 4 und 5) noch
einen weiteren Vorteil auf. Durch den Zusatz von Fettsäure wird das Haften der Celluloseoberflächen stark vermindert. Flachgelegtes Schlauchmaterial mit diesen Zusätzen
kann leicht und ohne Zerstörung von einer Rolle abgewickelt und der Schlauch ohne Beschädigung geöffnet werden. Diese Eigenschaften sind für die Verarbeitung der
Viskosemembran bei der Herstellung eines Dialysators von
großer Bedeutung.

---------

HOECHST AKTIENGESELLSCHAFT
KALLE Niederlassung der Hoechst AG

83/K 028                    - 19 -                30. April 1984
                                                  WLJ-DC.Ho-bl


Patentansprüche


1. Aus Viskose hergestellte Membran für die Dialyse, insbesondere für die Hämodialyse, aus regenerierter Cellulose mit verbesserten Diffusionseigenschaften, dadurch gekennzeichnet, daß sie eine Trockendicke von bis zu 50 $\mu$m besitzt, daß ihre Ultrafiltrationsrate im Bereich von $15 \cdot 10^{-5}$ bis $30 \cdot 10^{-5}$ $\left[\text{cm/sec} \cdot \text{bar}\right]$ liegt und daß sie eine diffusive Permeabilität zwischen $8,0 \cdot 10^{-4}$ und $11 \cdot 10^{-4}$ $\left[\text{cm/sec}\right]$ aufweist, gemessen an der Permeation von Harnstoff, und zwischen $9,0 \cdot 10^{-5}$ und $13,5 \cdot 10^{-5}$ $\left[\text{cm/sec}\right]$, gemessen an der Permeation von Vitamin $B_{12}$.


2. Membran nach Anspruch 1, dadurch gekennzeichnet, daß sie eine Schlauchmembran ist, welche bei einer Naßfestigkeit von nicht weniger als 0,33 bar eine Ultrafiltrationsrate im Bereich von $18 \cdot 10^{-5}$ bis $30 \cdot 10^{-5}$ $\left[\text{cm/sec} \cdot \text{bar}\right]$, bevorzugt von $19 \cdot 10^{-5}$ bis $25 \cdot 10^{-5}$ $\left[\text{cm/sec} \cdot \text{bar}\right]$, aufweist, deren diffusive Permeabilität für Harnstoff $8,0 \cdot 10^{-4}$ bis $11,0 \cdot 10^{-4}$ $\left[\text{cm/sec}\right]$, bevorzugt $8,5 \cdot 10^{-4}$ $\left[\text{cm/sec}\right]$, beträgt und deren diffusive Permeabilität für Vitamin $B_{12}$ $9,5 \cdot 10^{-5}$ bis $13,5 \cdot 10^{-5}$ $\left[\text{cm/sec}\right]$, bevorzugt $10 \cdot 10^{-5}$ bis $12,5 \cdot 10^{-5}$ $\left[\text{cm/sec}\right]$, beträgt.


3. Membran nach einem der Ansprüche 1 oder 2, dadurch gekennzeichnet, daß ihre Trockendicke bevorzugt im Bereich von 20 bis 40 $\mu$m liegt.


4. Verfahren zur Herstellung einer Membran nach einem der Ansprüche 1 bis 3, bei dem Cellulose chemisch in Alkalicellulose umgewandelt wird, diese mit Schwefelkohlenstoff zur Viskose umgesetzt wird, welche dann durch Spinndüsen in eine Mineralsäure enthaltende Fällflüssigkeit extrudiert wird, dadurch gekennzeichnet, daß der Viskose vor dem Eintritt in die Spinndüse, durch welche die Extrusion in die Fällflüssigkeit erfolgt, eine Flüssigkeit zugefügt wird, enthaltend eine verdünnte wäßrige Lösung, eine Emulsion oder eine Dispersion von nieder- oder hochmolekularen, wasserlöslichen oder in Wasser emulgier- oder dispergierbaren Verbindungen, und diese in einem Homogenisator intensiv mit der Viskose vermischt wird.

5. Verfahren nach Anspruch 4, dadurch gekennzeichnet, daß die Flüssigkeit der Viskose in einer Menge von 5 bis 100 Gew.-%, vorzugsweise von 20 bis 50 Gew.-%, bezogen auf das Gewicht der Viskose, beigemischt wird.

6. Verfahren nach einem der Ansprüche 4 oder 5, dadurch gekennzeichnet, daß der Viskose eine Flüssigkeit beigemischt wird, enthaltend hydroxylgruppenhaltige und/oder carboxylgruppenhaltige, nieder- oder hochmolekulare, wasserlösliche oder in Wasser emulgier- oder dispergierbare organische Verbindungen sowie dazu gegebenenfalls als Emulsions- oder Dispersionsstabilisatoren wirkende oberflächenaktive Verbindungen.

7. Verfahren nach einem der Ansprüche 4 bis 6, dadurch gekennzeichnet, daß die der Viskose beigemischte Flüssigkeit in Wasser oder in wäßrigem Alkali lösliche anorgani-

HOECHST AKTIENGESELLSCHAFT
KALLE Niederlassung der Hoechst AG

83/K 028                          - 21 -

sche Verbindungen enthält, wie Alkalisulfat, in einer Menge von 0,2 bis 10 Gew.-%, vorzugsweise von 2 bis 5 Gew.-%, oder Alkalisilikat in einer Menge von 0,1 bis 3 Gew.-%, vorzugsweise 0,3 bis 2 Gew.-%, jeweils bezogen auf das Gesamtgewicht der beigemischten Flüssigkeit.

8. Verfahren nach einem der Ansprüche 4 bis 7, dadurch gekennzeichnet, daß die der Viskose beigemischte Flüssigkeit ein Gemisch von Wasser und mit Wasser unbegrenzt mischbaren Alkoholen ist, wobei der Alkoholanteil 5 bis 50 Gew.-%, vorzugsweise 10 bis 25 Gew.-%, bezogen auf das Gesamtgewicht der beigemischten Flüssigkeit beträgt.

9. Verfahren nach einem der Ansprüche 4 bis 6, dadurch gekennzeichnet, daß die der Viskose beigemischte Flüssigkeit ein Gemisch von Wasser und mit Wasser nicht unbegrenzt mischbaren Alkoholen ist, wobei der Alkoholanteil 5 bis 25 Gew.-%, bevorzugt 5 bis 10 Gew.-%, bezogen auf das Gesamtgewicht der beigemischten Flüssigkeit, beträgt und wobei als Lösungsvermittler zusätzlich bis zu 50 Gew.-% mit Wasser unbegrenzt mischbarer Alkohol zugegeben werden kann.

10. Verfahren nach einem der Ansprüche 4 bis 6, dadurch gekennzeichnet, daß die der Viskose beigemischte Flüssigkeit als Emulsions- oder Dispersionsstabilisatoren nichtionogene Tenside, bevorzugt Derivate von Sorbitanfettsäureestern, in Mengen von 3 bis 15 Gew.-%, bevorzugt 5 bis 10 Gew.-%, bezogen auf das Gesamtgewicht der beigemischten Flüssigkeit, enthält.

----------